# EUROPÄISCHE PATENTSCHRIFT

(11) **EP 4 141 273 B1**
(45) Veröffentlichungstag und Bekanntmachung des Hinweises auf die Patenterteilung: **28.08.2024**
(21) Anmeldenummer: 22192627.2
(22) Anmeldetag: 29.08.2022
(51) Int. Cl.: F16C 13/00, F16C 13/02

(54) **VERFAHREN ZUM HERSTELLEN EINER ANORDNUNG FÜR EINEN WALZENKÖRPER EINER INDUSTRIELLEN WALZE, ANORDNUNG, ENDVORRICHTUNG UND INDUSTRIELLE WALZE**
METHOD FOR PRODUCING AN ASSEMBLY FOR A ROLLER BODY OF AN INDUSTRIAL ROLLER, ASSEMBLY, END DEVICE AND INDUSTRIAL ROLLER
PROCÉDÉ DE FABRICATION D'UN AGENCEMENT POUR UN CORPS DE CYLINDRE D'UN ROULEAU INDUSTRIEL, AGENCEMENT, DISPOSITIF D'EXTRÉMITÉ ET ROULEAU INDUSTRIEL

(30) Priorität: 30.08.2021 DE 102021122370
(43) Veröffentlichungstag der Anmeldung: 01.03.2023
(73) Patentinhaber: Inometa GmbH, 32052 Herford (DE)
(72) Erfinder: Wünsche, Marc, 32758 Detmold (DE); Gaidetzka, Michael, 32107 Bad Salzuflen (DE); Tappe, Cedric, 32120 Hiddenhausen (DE)
(74) Vertreter: Bittner, Thomas L.

(56) Entgegenhaltungen:
- DE-A1- 102008 027 494
- DE-A1- 102019 121 824
- DE-A1- 19 939 775
- US-A1- 2014 311 368
- US-A1- 2020 165 093

## Beschreibung

Die Erfindung betrifft ein Verfahren zum Herstellen einer Anordnung für einen Walzenkörper einer industriellen Walze, eine Anordnung für einen Walzenkörper einer industriellen Walze, eine Endvorrichtung sowie eine industrielle Walze.

### Hintergrund

Ein Walzenkörper für eine industrielle Walze weist üblicherweise einen rotationssymmetrischen Hohlkörper mit Zylinderform auf, an dem im Bereich gegenüberliegender Enden eine jeweilige Endvorrichtung angeordnet ist. Bauteile für die Endvorrichtungen werden zum Beispiel aus Metall- oder Kunststoffmaterialien hergestellt, insbesondere mittels spanender Verfahren, um die einzelnen Bauteile dann für die Montage des Walzenkörpers an dem rotationssymmetrischen Hohlkörper zusammenzufügen.

Dokument DE 10 2008 027 494 A1 offenbart eine mehrteilige Walze, insbesondere Arbeits- oder Stützwalze, für ein Walzwerk. Die Walze weist Folgendes auf: eine Hülse, einen linken Halbzapfen und einen rechten Halbzapfen, wobei die Halbzapfen in dem Bereich, der von der Hülse umgeben wird, kegelstumpfförmig ausgebildet sind und auf dem linken Halbzapfen eine linke Oberfläche und auf dem rechten Halbzapfen eine rechte Oberfläche ausbilden. Der linke Halbzapfen und der rechte Halbzapfen sind mit Bohrungen und hiermit korrespondierenden Nuten ausgebildet, wobei die Nuten auf den Oberflächen ausgebildet sind.

Dokument DE 10 2019 121 824 A1 offenbart eine Vorrichtung für einen Walzenkörper einer Rotationswalze, mit einem äußeren Hohlkörper, der eine Zylinderform aufweist und mit einem inneren Hohlraum gebildet ist; einem inneren Körper, der eine Zylinderform aufweist und in einer Anordnung mit dem äußeren Hohlkörper in dem inneren Hohlraum des äußeren Hohlkörpers angeordnet ist; und einer Zentriereinrichtung, mit der beim Montieren der Anordnung der innere Körper in dem inneren Hohlraum zentriert positioniert wird; einer jeweiligen Materialbrücke in gegenüberliegenden Endbereichen der Anordnung, wobei die jeweilige Materialbrücke mittels einer Füllmasse gebildet ist, die in einem Zwischenraum der Anordnung endseitig zwischen einer inneren Oberfläche des äußeren Hohlkörper und einer äußeren Oberfläche des inneren Körpers eingebracht und ausgehärtet ist; mit der inneren Oberfläche des äußeren Hohlkörpers und der äußeren Oberfläche des inneren Körpers jeweils im Kontakt und hierzwischen durchgehend gebildet ist und den äußeren Hohlkörper und den inneren Körper in der Anordnung formstabil verbindet.

Das Dokument DE 199 39 775 A1 betrifft eine zum Einsatz in Rotationsdruckmaschinen als Rolle oder als Druckzylinder vorgesehene Zylinderkonstruktion aus konzentrischen Zylinderrohren in Sandwichbauweise mit einem Außenrohr und mindestens einem darin angeordneten Innenrohr, wobei in dem Leerraum zwischen Außenrohr und Innenrohr eine Schaumfüllung angeordnet ist.

### Zusammenfassung

Aufgabe der Erfindung ist es, ein Verfahren zum Herstellen einer Anordnung für einen Walzenkörper einer industriellen Walze sowie eine solche Anordnung anzugeben, die es ermöglichen, Walzenkörper für Industriewalzen effizient und flexibel für verschiedene Anwendungszwecke herzustellen.

Zur Lösung sind ein Verfahren zum Herstellen einer Anordnung für einen Walzenkörper einer industriellen Walze sowie eine Anordnung für einen Walzenkörper einer industriellen Walze nach den unabhängigen Ansprüchen 1 und 12 geschaffen. Weiterhin sind eine Endvorrichtung und eine industrielle Walze nach den Ansprüchen 13 und 14 geschaffen. Ausgestaltungen sind Gegenstand von abhängigen Unteransprüchen.

Das Fertigen der Endvorrichtung mittels des mindestens einen additiven Verfahrens ermöglicht es, Endvorrichtungen mit unterschiedlichster konstruktiver Gestaltung für verschiedene Anwendungszwecke flexibel und kostengünstig herzustellen. Mit Hilfe von additiven Fertigungsmethoden können sehr verschiedene Geometrien gefertigt werden, die mit heutigen Produktionsmethoden nicht oder nur sehr aufwendig herzustellen sind.

Neben einer möglichen Gewichtsreduzierung für die Endvorrichtung ist mittels Einsatz der additiven Fertigung eine bessere Wirtschaftlichkeit innerhalb einer Einzel- und Kleinserienfertigung ermöglicht. Bei der additiven Fertigung kann zum Beispiel auf die Anfertigung einer technischen Zeichnung verzichtet werden, da eine Fertigung des Bauteils hauptsächlich auf digitalem Wege geschieht. Außerdem werden während der Fertigung der Endvorrichtung keine bauteilspezifischen Werkzeuge oder dergleichen benötigt.

Die additive Fertigung ermöglicht eine höhere Werkstoffeffizienz und zudem eine Optimierung der Lieferzeiten. Die Prozesskette der additiven Fertigung stellt im Vergleich zur spanenden Fertigung eine Verkürzung der Vorbereitungs- bzw. der Rüstzeit dar, die sich sogleich in Zeit- und somit in Kostenersparnis widerspiegelt.

Bei der Anordnung für den Walzenkörper kann im Rahmen der Herstellung in einem gegenüberliegenden seitlichen Endbereich des rotationssymmetrischen Hohlkörpers eine zugeordnete weitere Endvorrichtung angeordnet und mit dem rotationssymmetrischen Hohlkörper verbunden werden.

Mit Hilfe der Endvorrichtungen in den gegenüberliegenden Endbereichen des rotationssymmetrischen Hohlkörpers ist die Anordnung für eine drehende Lagerung des Walzenkörpers hergerichtet. Hierzu können die Endvorrichtungen zum Beispiel seitlich überstehende Lagerzapfen aufweisen.

Die Endvorrichtungen können jeweils eine Hohlstruktur aufweisen, die eingerichtet ist, zum Beispiel ein Wälzlager aufzunehmen. Alternativ oder ergänzend können die Endvorrichtungen jeweils mit einer Kanalstruktur zur Schmierung / Nachschmierung und / oder zur Kühlung der montierten Lager ausgebildet sein.

Die Endvorrichtung kann als einstückig ausgeführte Endvorrichtung hergestellt sein. Hierdurch entfällt Montageaufwand, wie er bei der Fertigung der Endvorrichtung aus mehreren Bauteilen und deren Zusammensetzen für die Montage an dem rotationssymmetrischen Hohlkörper notwendig ist.

Mittels der Endvorrichtung können in einer Ausgestaltung der rotationssymmetrische Hohlkörper und ein weiterer rotationssymmetrischer Hohlkörper mit Zylinderform miteinander verbunden werden, wobei der rotationssymmetrische Hohlkörper und der weitere rotationssymmetrische Hohlkörper unterschiedliche Durchmesser aufweisen. Hierbei kann mit Hilfe von Dehnspannstellen von außen als weiterer rotationssymmetrischer Hohlkörper eine weitere (industrielle) Walze aufgenommen oder gespannt werden. Die im Durchmesser größere weitere Walze bildet ein (äußeres) Gegenstück und kann in einem Spannbereich eine metallische Buchse aufweisen, so dass mittels Ausdehnung des Spannbereiches die vom rotationssymmetrischen Hohlkörper gebildete erste Walze aufgenommen wird.

Die Endvorrichtung wird beim Herstellen unter Verwendung des additiven Fertigungsverfahrens mit einer Fluidkanalstruktur hergestellt, welche mit einem Fluid befüllbar ist.

Die Endvorrichtung wird mit einer elastisch nachgebenden Dehnwand hergestellt, die zumindest abschnittsweise an die Fluidkanalstruktur grenzt und eingerichtet ist, sich bei Druckbeaufschlagung durch das Fluid in der Fluidkanalstruktur zu dehnen. Die Dehnwand kann eingerichtet sein, sich nach einer Außenseite hin elastisch zu dehnen oder zu verformen. Hierdurch können Dehnspannstellen bereitgestellt sein.

Die elastisch nachgebende Dehnwand kann entlang einer umlaufenden Oberfläche der Endvorrichtung hergestellt werden, sei es umlaufend durchgehend oder unterbrochen mit getrennten Segmenten, wobei die elastisch nachgebende Dehnwand innenseitig an einen flächig ausgebildeten Kanalabschnitt der Fluidkanalstruktur grenzt. Der Kanalabschnitt kann umlaufend durchgehend oder unterbrochen mit getrennten Kanalsegmenten gebildet sein. Auf diese Weise kann entlang der Umfangsfläche in einem Abschnitt der Endvorrichtung umlaufend durchgehend oder in Abständen eine Dehnung (Bauteilvergrößerung) ausgebildet werden, die zur Ausbildung verschiedener Funktionen nutzbar ist.

Die elastische nachgebende Dehnwand kann in einem Bereich einer Lagerung für eine Achse der Endvorrichtung ausgebildet und eingerichtet sein, die Achse in der Lagerung zu spannen und / oder die Lagerung einzustellen. Beispielweise kann die Dehnung der Dehnwand eingerichtet sein, ein Lager der Lagerung an der Endvorrichtung zu spannen, welches der Aufnahme einer Achse dient. Alternativ oder ergänzend kann die mittels der Dehnwand bereitstellbare Dehnung eingerichtet sein, eine Stellung oder Position des Lagers (der Lagerung) in Bezug auf die Endvorrichtung einzustellen oder zu verändern. Hierbei kann mittels Dehnung der Dehnwand das Lager in unterschiedliche Stellungen oder Positionen verlagert werden.

Die elastische nachgebende Dehnwand kann eingerichtet sein, die Endvorrichtung mittels Dehnen an dem rotationssymmetrischen Hohlkörper und / oder dem weiteren rotationssymmetrischen Hohlkörper zu spannen. Hierdurch kann eine feste (lösbare) Verbindung zwischen Endvorrichtung und dem Hohlkörper ausgebildet werden.

Auf dem zylindrischen Hohlkörper kann außen mindestens ein weiterer zylindrischer Hohlkörper angeordnet werden, zum Beispiel ein Adapter, welcher mittels der nach außen gedrückten Dehnwand gespannt wird. Die Dehnwand kann hierbei die Wandung des zylindrischen Hohlkörpers gegen die Innenseite der Wandung des Weiteren zylindrischen Hohlkörpers drücken. Alternativ drückt die nach außen gedehnte Dehnwand innenseitig direkt gegen den weiteren rotationssymmetrischen Hohlkörper, um diesen an der Endvorrichtung zu spannen. Hierbei kann vorgesehen sein, dass der rotationssymmetrische Hohlkörper, welcher von dem weiteren rotationssymmetrischen Hohlkörper umgriffen wird, mit der Endvorrichtung verklebt wird.

Die Fluidkanalstruktur kann mit einem Kühlkanal gebildet werden, welcher einem im Betrieb zu kühlenden Abschnitt zugeordnet ist. Der Kühlkanal kann entlang eines Umfangsbereichs, zum Beispiel in einer Umfangsfläche, durchgehend oder unterbrochen ausgebildet sein. Beispielsweise kann der Kühlkanal benachbart zur Lagerung einer an der Endvorrichtung aufgenommenen Achse ausgebildet sein, um einer im Betrieb auftretende Erwärmung entgegenzuwirken.

Die Fluidkanalstruktur kann mit einem Schmierkanal gebildet werden, welcher mit einer Gleitlagerstelle in Fluidverbindung steht. Hierdurch kann einem oder mehreren Bereichen der Endvorrichtung und / oder benachbart hierzu ein Gleit- oder ein Schmiermittel zugeführt werden, zum Beispiel einem Lagerbereich. Der Schmierkanal kann entlang eines Umfangsbereiches, zum Beispiel in einer Umfangsfläche, durchgehend oder unterbrochen ausgebildet sein.

Bei der Endvorrichtung kann die Fluidkanalstruktur mit einem mittleren Kanalabschnitt hergestellt werden, der sich in Bezug auf den Querschnitt der Endvorrichtung im Wesentlichen mittig zwischen gegenüberliegenden Verbindungen zu dem umlaufend flächig und durchgehend ausgebildete Kanalabschnitt erstreckt und eingerichtet ist, das Fluid dem umlaufend flächig und durchgehend ausgebildeten Kanalabschnitt zuzuführen.

Die Endvorrichtung kann mit einer Druckerzeugungseinrichtung hergestellt werden, die mit der Fluidkanalstruktur verbunden und eingerichtet ist, das Fluid in der Fluidkanalstruktur mit einem Druck zu beaufschlagen. Hierdurch kann zum Beispiel eine elastische Verformung oder Dehnung der Dehnwand bewirkt werden.

Die Endvorrichtung kann mit einer Befüllvorrichtung hergestellt werden, die mit der Fluidkanalstruktur verbunden und eingerichtet ist, die Fluidkanalstruktur mit dem Fluid zu befüllen.

Die Endvorrichtung kann mit einer verschließbaren Entlüftungsvorrichtung hergestellt werden, die mit der Fluidkanalstruktur verbunden und eingerichtet ist, die Fluidkanalstruktur zum vollständigen Befüllen mit dem Fluid zu entlüften.

Die Endvorrichtung kann mittels mindestens eines additiven Fertigungsverfahrens aus der folgenden Gruppe hergestellt werden: extrusionsbasiertes, additives Verfahren; Binder Jetting oder Single Pass Jetting (SPJ); Auftragsverfahren; 3D-Druckverfahren; selektives Elektronenstrahlschmelzen (EBM); und pulverbettbasiertes Verfahren. Es kann ein Gussverfahren vorgesehen sein, bei dem eine wiederverwendbare additiv gefertigte Endvorrichtung als Negativform zum Abformen für einen anschließenden Gießprozess genutzt wird. Weiterhin kann ein Gussverfahren vorgesehen sein, bei dem eine additiv

Als extrusionsbasiertes, additives Verfahren kann zum Beispiel das Fused Deposition Modeling (FDM) oder dergleichen verwendet werden. Als pulverbettbasiertes Verfahren können beispielsweise das selektive Lasersintern (SLS) oder das selektive Laserschmelzen (SLM) zum Einsatz kommen. Beim Auftragsverfahren können Laserauftragsschweißen (LMD) oder Metallpulverauftrag (MPA) verwendet werden. Als pulverbettbasiertes Verfahren können selektives Lasersintern (SLS) oder selektives Laserschmelzen (SLM) verwendet werden. Gasverdüstes Metallpulver mit einer Pulverkörnergröße zwischen etwa 10 µm und etwa 63 µm kann hierbei zum Einsatz kommen.

Als Gießereimodell kann ebenso ein additiv gefertigtes Modell, zum Beispiel Wachsmodell, verwendet werden, das als sogenannte verlorene Form beim Gießprozess aufschmilzt und verdampft und somit verloren geht.

Für die Fertigung der Endvorrichtung können verschiedene additive Fertigungstechnologien verwendet werden, die die gestellten mechanischen Anforderungen erfüllen. Hierbei bietet das "Single Pass Jetting"-Verfahren (SPJ) wirtschaftlich Vorteile. Es ermöglicht ständiges Aufbringen eines Binde- bzw. eines Antibindemittels auf jede Pulverschicht und somit das Fertigen von Metall-Grünlingen binnen weniger Minuten. Anschließend werden die Grünlinge vom überschüssigen Metallpulver befreit und in einem Hochleistungsofen bei hoher Temperatur gesintert, wobei sich das Bindemittel im Bauteil thermisch auflöst und zugleich seine mechanischen Eigenschaften erhält.

Beim Herstellen der Endvorrichtung kann ein Verfahrensschritt zum Sintern vorgesehen sein, beispielweise nach der Verwendung des Metallpulverspritzgießens. Zum Beispiel kann ein MIM-Verfahren zum Einsatz kommen (MIM - Metal Injection Molding).

Nachfolgend werden weitere Ausführungsformen beschrieben.

Als Ausgangswerkstoff der additiv gefertigten Endvorrichtung können metallische Werkstoffe oder Kunststoffe in Pulverform oder gebunden als Filament verwendet werden.

Zudem kann die Endvorrichtung aus rezykliertem Material oder einer Mischung an Materialen gefertigt werden. Dies ermöglicht formstabile und belastungsfähige gedruckte Endvorrichtungen und zum anderen die Aufarbeitung von industriellen Abfällen. Das Rezyklieren von industriellen Abfällen fördert den Umweltschutz und sorgt für ressourcenschonende Produktionsprozesse. Hierbei kann zusätzlich ein wirtschaftlicher Vorteil generiert werden, da die Herstellung von neuen Werkstoffen neben dem Bedarf an fossilen Ressourcen sehr energieintensiv ist.

Die Kombination einer additiv gefertigten Endvorrichtung mit einem topologisch optimierten Aufbau führt zu einer Reduzierung des Gewichtes im Vergleich zu spanend gefertigte Maschinenbaukomponenten aus Metall. Dieser Aspekt fördert den Gedanken des Leichtbaus und führt ebenso zu einem besseren Handling des Gesamtproduktes beim Endkunden.

In einem ersten Prozessschritt kann die Endvorrichtung am Computer mittels einer Computer-Aided-Design-Software (CAD) erstellt werden. Anschließend wird die erzeugte CAD-Datei in ein STL-Format - Standard Tessellation Language bzw. Standard Triangulation Language - konvertiert, die als Basis für die additive Fertigung dient. Dieses Format beschreibt die Oberfläche von 3D-Modellen durch Dreiecksfacetten oder Polygone. Eine Dreiecksfacette wird durch drei Eckpunkte und durch die dazugehörige Flächennormale des Dreiecks gekennzeichnet. Je nach Komplexität und gewünschter Auflösung des 3D-Körpers wird zur Abbildung von Rundungen entsprechend viel Speicherplatz benötigt.

Zudem kann eine Aufbereitung der STL-Datei in ein Schichtmodell vorgesehen sein. Hierbei werden Parametereinstellungen, zum Beispiel Druckqualität, Druckgeschwindigkeit, Material, ggf. Einsatz von Stützmaterial, vorgenommen und in eine, für den Drucker notwendige, G-Code-Datei überführt. Der G-Code ist eine Maschinensprache, mit deren Hilfe die Motoren einer Maschine angesteuert werden. Für jede maschinelle Bewegung bedarf es eines G-Code-Befehls, die gebündelt in einer G-Code-Datei vorliegen.

Bevor die additive Fertigung gestartet wird, kann - je nach Druckverfahren - Material in Form von Pulver oder Draht zugeführt werden. Nach dem Hochladen der aufbereiteten Datei kann der Bau des Objektes begonnen werden. Nach der Entnahme der gedruckten Endvorrichtung erfolgt ggf. eine Nachbearbeitung in Abhängigkeit des Druckverfahrens. Eine Nachbearbeitung kann u. a. das Schleifen, Reinigen, Lackieren, Polieren, Versiegeln oder eine thermische und chemische Behandlung umfassen. Bei zahlreichen Druckverfahren ist ggf. Stützmaterial notwendig, das nach dem Druck mechanisch bzw. manuell entfernt werden muss. Eine mangelhafte Druckgenauigkeit, eine gewünschte Färbung des Objektes und eine Abweichung in der Oberflächenqualität sind weitere Gründe für eine Nachbearbeitung. Ebenso kann unter Umständen eine thermische Nachbearbeitung für eine Reduzierung von Eigenspannung bei metallgedruckten Objekten erforderlich sein. Darüber hinaus kann eine spanende Nachbearbeitung von Passflächen notwendig sein.

Die additiv gefertigte Endvorrichtung kann Kanäle oder ein Kanalsystem (Fluidkanalstruktur) oder Bohrungen für ein druckbeaufschlagbares Strömungs- oder Fluidmittel aufweisen. Die in der Endvorrichtung additiv gefertigten Kanäle dienen der Aufnahme eines druckbeaufschlagbaren Strömungsmittels, das in den Kanälen weitergeleitet wird. Zu den druckbeaufschlagbaren Strömungsmitteln kann komprimierte Luft als auch hydraulisches Öl und andere Fluide verwendet werden. Für die Weiterleitung oder Aufnahme des druckbeaufschlagbaren Strömungsmittels innerhalb des Kanales dient wenigstens eine Anschlussmöglichkeit für eine Leitung aus Gummi, Kunststoff oder Metall.

Die Endvorrichtung kann mit einer Spannvorrichtung zur Aufnahme eines oder mehrerer weiterer rotationssymmetrischer Körper ausgeführt sein. Solche Endvorrichtungen sind innerhalb einer industriellen Walze über eine (Rohr-)Leitung verbunden, sodass die am rotationssymmetrischen Hohlkörper in gegenüberliegenden Endbereichen angeordneten Endvorrichtungen innerhalb eines geschlossenen Fluidkreislaufes fungieren.

Zumindest eine der Endvorrichtungen kann mindestens einen Druckerzeugungsraum aufweisen, der über zugeordnete Hydraulikmittelkanäle mit Befüll- und Entlüftungsvorrichtungen sowie über Expansionskammern verbunden ist. Durch eine Druckerzeugungsvorrichtung wird das Volumen innerhalb des geschlossenen Fluidkreislaufes mit Hilfe eines beweglichen Körpers vergrößert oder verkleinert, sodass eine elastisch nachgiebige Dehnwand im Spannbereich sich entweder nach außen weitet oder zurück in die Ursprungsform gebracht wird.

Durch die Integration von Funktionen innerhalb einer Endvorrichtung werden Fertigungskosten und der dazugehörige Montageaufwand im Vergleich zu einer herkömmlichen hydraulischen Spanneinrichtung optimiert.

Die vorangehend in Verbindung mit dem Verfahren zum Herstellen erläuterten Ausgestaltungen gelten für die Anordnung für den Walzenkörper einer industriellen Walze entsprechend.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: einen schematischen Aufbau einer im Schnitt dargestellten Industriewalze mit zwei Endvorrichtungen;
- Fig. 2: eine additiv gefertigte Endvorrichtung mit einer Fluidkanalstruktur;
- Fig. 3: eine additiv gefertigte Endvorrichtung als Spannzapfen mit einem Spannbereich mit einer Dehnwand sowie einer Druckerzeugungseinrichtung, einem Schraubkörper und einer Befüllvorrichtung im Querschnitt;
- Fig. 4: die additiv gefertigte Endvorrichtung aus Fig. 3 im Spannbereich im Schnitt;
- Fig. 5: eine weitere additiv gefertigte Endvorrichtung, die als Spannzapfen ausgebildet ist, mit einem Spannbereich mit einer Dehnwand und einer Entlüftungsvorrichtung im Querschnitt;
- Fig. 6: eine topologisch optimierte, additiv gefertigte Endvorrichtung für die Aufnahme von zwei rotationsymmetrischen Hohlkörpern;
- Fig. 7: eine additiv gefertigte und als Einstellzapfen ausgebildete Endvorrichtung mit Druckerzeugungseinrichtung, Schraubkörper, Befüllvorrichtung, Entlüftungsvorrichtung, einem Lager, einem Sicherungsring und einer Achse im Querschnitt sowie eine erweiterte Schnittdarstellung im Bereich des Lagers;
- Fig. 8: eine weitere additiv gefertigte und als Einstellzapfen ausgebildete Endvorrichtung mit Druckerzeugungseinrichtung, Schraubkörper, Befüllvorrichtung, Entlüftungsvorrichtung, einem Lager, einem Sicherungsring und einer Achse im Querschnitt sowie eine erweiterte Schnittdarstellung im Bereich des Lagers;
- Fig. 9: eine weitere additiv gefertigte Endvorrichtung mit einer Fluidkanalstruktur mit einem Kühlkanal und einer Lagerung im Querschnitt sowie eine erweiterte Schnittdarstellung im Bereich der Lagerung; und
- Fig. 10: eine additiv gefertigte Endvorrichtung mit einer Fluidkanalstruktur mit einem Schmierkanal für eine hydraulische Gleitlagerung im Querschnitt sowie eine erweiterte Schnittdarstellung im Bereich der Gleitlagerung.

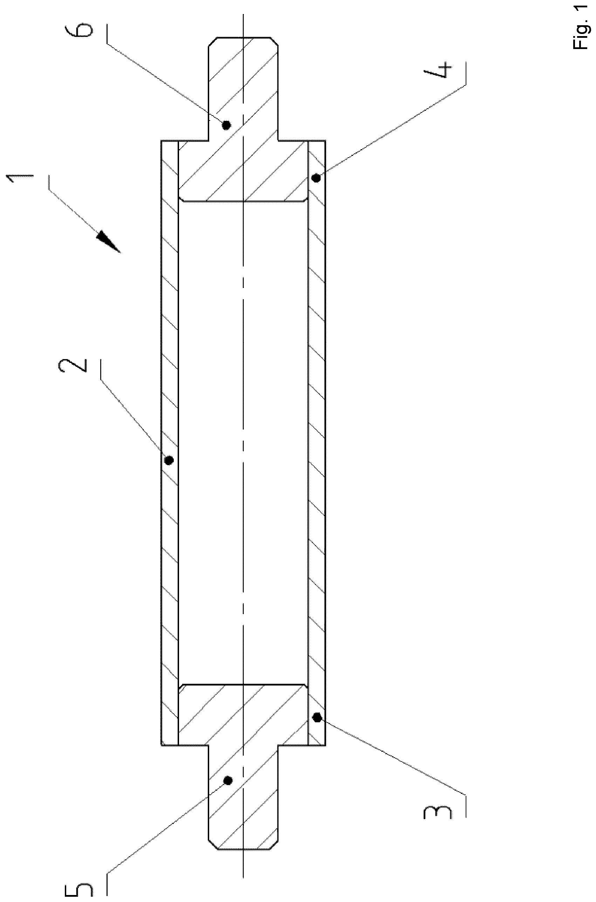

Fig. 1 zeigt eine schematische Darstellung einer industriellen Walze (Industriewalze) 1 mit einem Hohlkörper 2, der rotationssymmetrisch und mit einer Zylinderform ausgebildet ist, im Schnitt. In gegenüberliegenden Endbereichen 3, 4 des Hohlkörpers 2 ist eine jeweilige Endvorrichtung 5, 6 angeordnet, die mit dem Hohlkörper 2 verbunden und so festsitzend montiert ist. Die Endvorrichtungen 5, 6 sind vor der Montage in den Endbereichen 3, 4 des Hohlkörpers 2 mittels zumindest eines additiven Fertigungsverfahrens hergestellt, insbesondere jeweils als einstückiges Bauteil. Der Hohlkörper 2 wird hierbei aus einem faserverstärkten Composite-Material und / oder einem metallischen Werkstoff hergestellt. Die Endvorrichtungen 5, 6 werden mittels des additiven Herstellungsverfahrens aus einem metallischen und / oder einem polymeren Werkstoff gefertigt. Mit Hilfe der Endvorrichtungen 5, 6 ist die industrielle Walze 1 hergerichtet für eine drehende Lagerung in einer zugeordneten Aufnahme (nicht dargestellt) in der Maschine, in welcher die Industriewalze 1 zum Einsatz kommt.

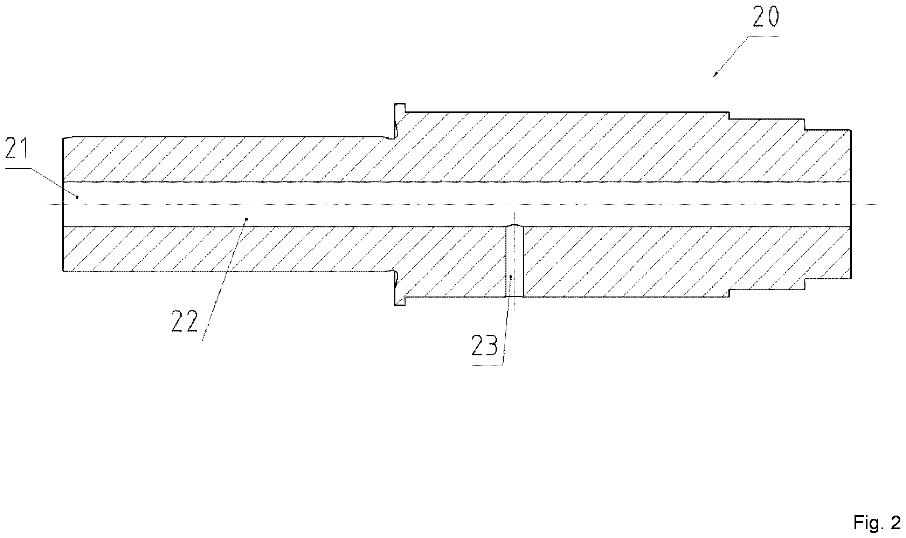

Fig. 2 bis 10 zeigen alternative Ausführungsformen für die Endvorrichtungen 5, 6.

Fig. 2 zeigt eine Ausführungsform einer Endvorrichtung 20, die einstückig ausgeführt und mit Hilfe des mindestens einen additiven Fertigungsverfahrens mit einer Fluidkanalstruktur 21 mit einem sich in Längsrichtung erstreckenden Kanal 22 sowie einem sich in Querrichtung erstreckenden Kanal 23 ausgeführt ist.

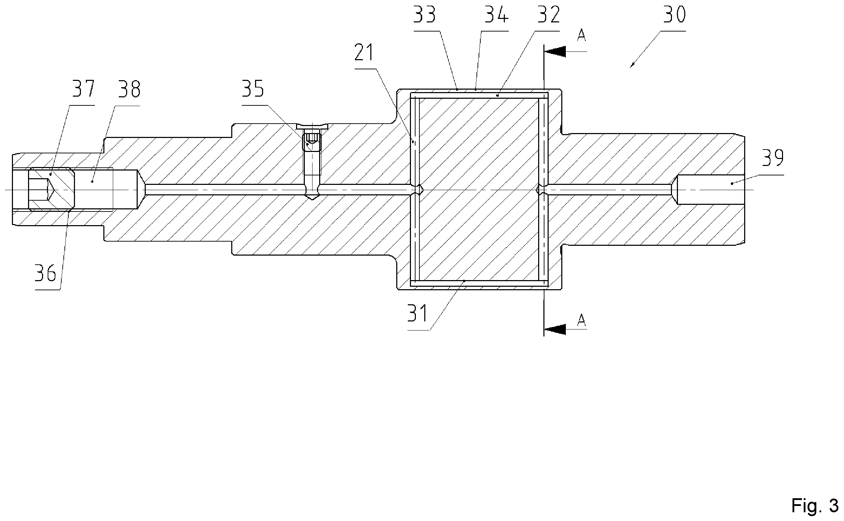

Fig. 3 zeigt eine Endvorrichtung 30 in einer weiteren Ausführung im Schnitt, bei der ebenso eine Fluidkanalstruktur 21 ausgebildet ist. Die Fluidkanalstruktur 21 umfasst einen sich innenseitig gegenüber einer Umfangsfläche 31 erstreckenden Kanalabschnitt 32, welcher auf einer Innenseite an eine Dehnwand 33 grenzt, welche in einem Abschnitt der Endvorrichtung 30 gebildet ist, der bei der Montage der Endvorrichtung 30 im Hohlkörper 2 mit dessen Innenwand in Kontakt kommt. Der flächige Kanalabschnitt 32 ist beim gezeigten Ausführungsbeispiel umlaufend durchgehend gebildet. Wird ein Fluid oder Strömungsmittel in der Fluidkanalstruktur 21 mit Druck beaufschlagt, dehnt sich die Dehnwand 33, die als Teil eines Spannbereiches 34 vorgesehen ist, nach außen elastisch. Hierdurch ist es ermöglicht, auf dem Hohlkörper 2 ein oder mehrere weitere zylindrische Hohlkörper (Walzenkörper) zu spannen.

Bei der Ausführungsform in Fig. 3 steht die Fluidkanalstruktur 21 in Fluidverbindung mit einer Befüllvorrichtung 35, über die das Fluid in der Fluidkanalstruktur 21 einbringbar ist, sowie einer Druckerzeugungsvorrichtung 36, die mit einem Schraubmittel 37 gebildet ist, derart, dass das Schraubmittel 37 mehr oder weniger in eine Bohrung mit Gewinde 38 eingeschraubt werden kann, um so die Druckbeaufschlagung für das Fluid in der Fluidkanalstruktur 21 zu erhöhen oder zu mindern.

Gemäß Fig. 3 steht die Fluidkanalstruktur 21 weiterhin mit einer Anschlussvorrichtung 39 in Verbindung, die eingerichtet ist, zwischen den einander gegenüberliegenden Endvorrichtungen (vgl. Fig. 1) eine Fluidverbindung auszubilden, beispielweise mittels einer flexiblen Rohrleitung (nicht dargestellt), die dann im Inneren des Hohlkörpers 2 angeordnet ist, so dass mittels der Druckerzeugungsvorrichtung 36 das Fluid oder Strömungsmittel in beiden Endvorrichtungen 5, 6 mit Druck beaufschlagt werden kann.

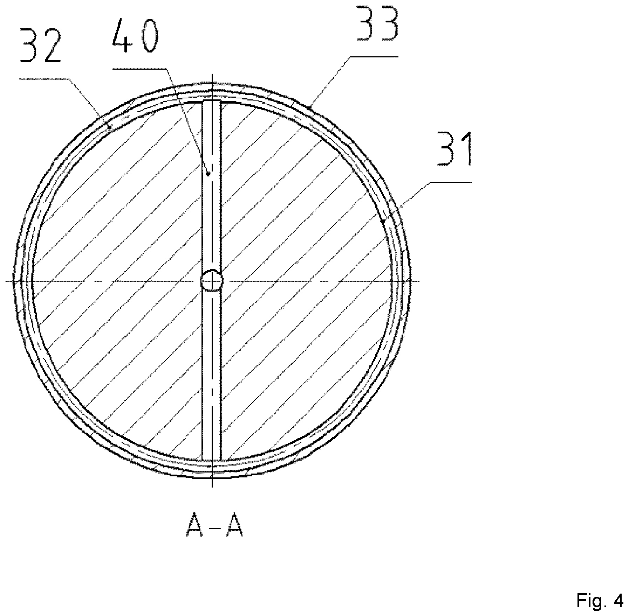

Fig. 4 zeigt eine Schnittdarstellung der Endvorrichtung 30 aus Fig. 3. Es ergibt sich, dass der umlaufend gebildete flächige Kanalabschnitt 32 auf gegenüberliegenden Seiten mit einem mittleren Kanalabschnitt 40 in Verbindung steht.

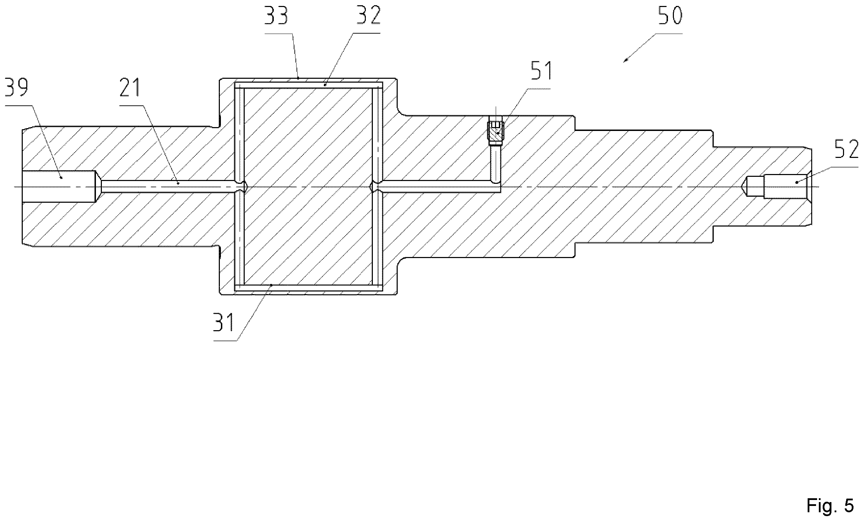

Fig. 5 zeigt eine Endvorrichtung 50 nach einer anderen Ausführungsform im Schnitt. Für gleiche Merkmale werden in Fig. 5 dieselben Bezugszeichen wie in den Fig. 2 bis 4 verwendet. Es ist eine Entlüftungsvorrichtung 51 vorgesehen, die beim Befüllen der Fluidkanalstruktur 21 mit dem Fluid zur Entlüftung nutzbar ist, um so ein im Wesentlichen vollständiges Befüllen der Fluidkanalstruktur 21 mit dem Fluid zu unterstützen.

Weiterhin ist eine Zentrierbohrung 52 vorgesehen, die als Positionierungshilfe für einen anschließenden möglichen Bearbeitungsprozess der Industriewalze dient.

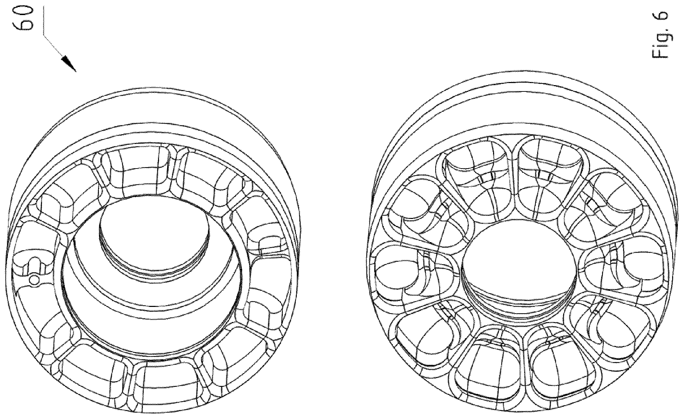

Fig. 6 zeigt perspektivische Darstellungen einer Endvorrichtung 60 nach einer zusätzlichen Ausführungsform schräg von vorn und hinten, die mit Hilfe eines additiven Verfahrens hergestellt ist. Das Design (insbesondere äußere Formgebung) der Endvorrichtung 60 ist topologisch optimiert. Die Endvorrichtung 60 ermöglicht die Aufnahme von zwei rotationssymmetrischen Hohlkörpern (nicht dargestellt).

Die vorgeschlagene Technologie ermöglicht die Herstellung topologieoptimierter Endvorrichtungen, für deren Fertigung nur exakt der Materialaufwand zum Einsatz kommt, der für die Erfüllung der an die Endvorrichtung gestellten Anforderungen notwendig ist. Mit Hilfe von spezieller rechnergestützten Software kann kraftflussorientiert das Leichtbaugewicht der Endvorrichtung auf höchstem Niveau optimiert werden. So können Ressourcen natürlicher Art effizient bzw. nachhaltig geschont werden, was sich wiederum in Kostenersparnis widerspiegeln kann.

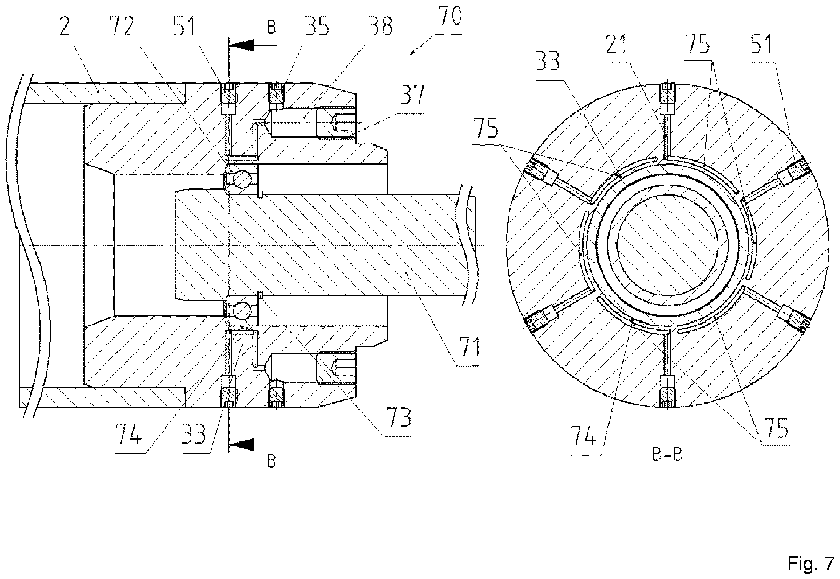

Fig. 7 zeigt eine Endvorrichtung 70 nach einer anderen Ausführungsform mit einer Achse 71, einer Lagerung 72 und einem Sicherungsring 73 im Schnitt sowie eine erweiterte Schnittdarstellung B-B im Bereich der Lagerung 72. Für gleiche Merkmale werden in Fig. 7 dieselben Bezugszeichen wie in den Fig. 1 bis 6 verwendet. Die Endvorrichtung 70 ermöglicht eine präzise radiale Verstellung 74 eines eingebauten Lagers im Bereich der Lagerung 72 mittels eines segmentartigen Aufbaus 75 der Dehnwand 33 innerhalb der Endvorrichtung 70. Jedes der Segmente 75 der Dehnwand 33 kann über die Fluidkanalstrukturen 21 mit einem Druck beaufschlagt werden, wobei dies für mehrere der Segmente 75 zusammen erfolgen kann. Alternativ sind die Segmente 75 einzeln individuell ansteuerbar, um eine jeweilige Dehnung zu bewirken oder zu beseitigen (Entspannen). Mittels der Segmente 75 wird das Lager 72 gespannt und kann zusätzlich in radialer Richtung positioniert oder verstellt werden.

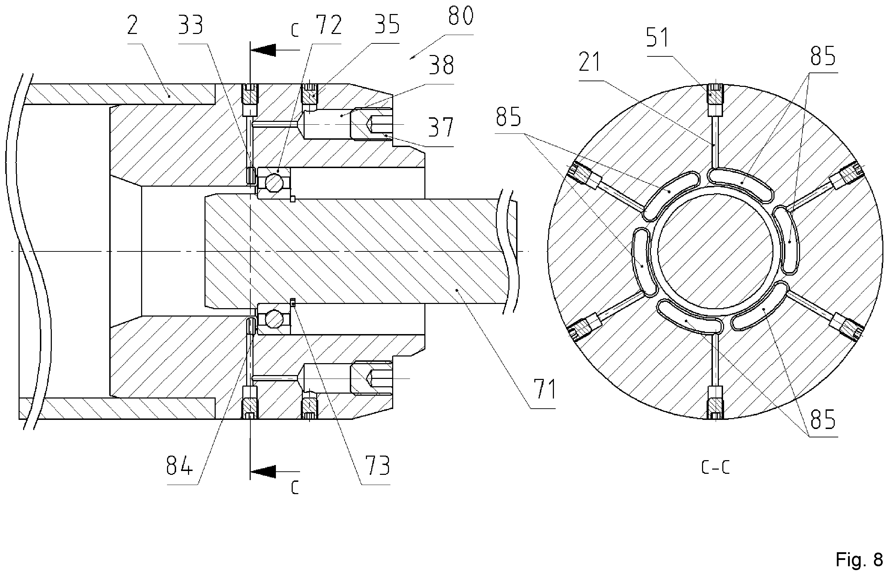

Fig. 8 zeigt eine weitere Endvorrichtung 80 mit Achse 71, Lagerung 72 und Sicherungsring 73 im Schnitt sowie einen erweiterten Schnitt C-C im Bereich der Lagerung 72. Für gleiche Merkmale werden in Fig. 8 dieselben Bezugszeichen wie in den Fig. 1 bis 7 verwendet. Die weitere Endvorrichtung 80 ermöglicht eine präzise axiale Ver- oder Einstellung 84 des Lagers 72 (welches die Achse 71 aufnimmt) mittels eines segmentartigen Aufbaus 85 innerhalb der Endvorrichtung 70. Jedes einzelne Segment 85 kann über die Fluidkanalstruktur 21 zum Dehnen des jeweils zugeordneten Dehnwandabschnitts mit einem Druck beaufschlagt werden, sei es einzeln oder in Gruppen von Segmenten.

Die Ausgestaltungen aus den Fig. 7 und 8 können als Kombination gemeinsam verwendet werden.

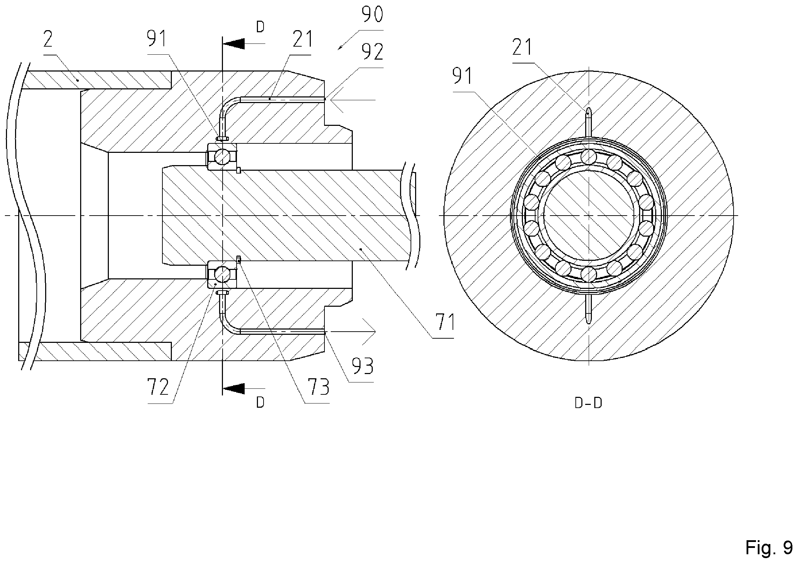

Fig. 9 zeigt eine Endvorrichtung 90 nach einer anderen Ausführungsform mit Achse 71, Lagerung 72 und Sicherungsring 73 im Querschnitt sowie einen erweiterten Schnitt D-D im Bereich der Lagerung 72. Zur Kühlung der Lagerung 72 umfasst die Endvorrichtung 90 als Teil der Fluidkanalstruktur 21 einen konturnahen, umlaufenden Kühlkanal 91. In hiermit gebildeter Kühlkreislauf wird von einem Kühlmittel (Fluid) zwischen einer Eingangsöffnung 92 und einer Ausgangsöffnung 93 in der Endvorrichtung 90 durchströmt, die an der Endvorrichtung 90 stirnseitig ausgebildet sein können.

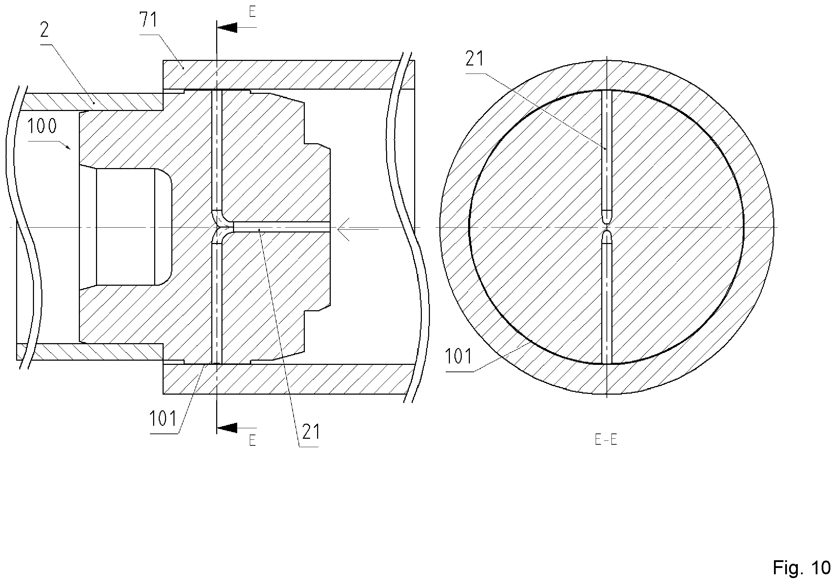

Fig. 10 zeigt eine Endvorrichtung 100 mit Achse 71 im Schnitt sowie einen erweiterten Schnitt E-E im Bereich der Lagerung 72 gezeigt. Hierbei ist die Endvorrichtung 100 mit der Fluidkanalstruktur 21 ausgestattet, die (über einen Schmierkanal) zu einer hydraulischen Gleitlagerstelle 101 führt. Die mit Hydrauliköl versorgte Gleitlagerstelle 101 lagert in dieser Ausführungsform verschleißarm die Achse 71.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer Anordnung für einen Walzenkörper einer industriellen Walze (1), mit:
- Bereitstellen eines rotationssymmetrischen Hohlkörpers (2), der eine Zylinderform aufweist und aus einem faserverstärkten Composite-Material und / oder einem metallischen Werkstoff besteht;
- Herstellen einer Endvorrichtung (20; 30; ...; 100) aus einem metallischen und / oder einem polymeren Werkstoff unter Verwendung eines additiven Fertigungsverfahrens; und
- Verbinden der Endvorrichtung (20; 30; ...; 100) mit dem rotationssymmetrischen Hohlkörper (2), wobei dieser hierbei in einem seitlichen Endbereich (3; 4) des rotationssymmetrischen Hohlkörpers (2) angeordnet wird,
wobei
- die Endvorrichtung (20; 30; ...; 100) beim Herstellen unter Verwendung des additiven Fertigungsverfahrens mit einer Fluidkanalstruktur (21) hergestellt wird, welche mit einem Fluid befüllbar ist; und
- die Endvorrichtung (20; 30; ...; 100) mit einer elastisch nachgebenden Dehnwand (33) hergestellt wird, die zumindest abschnittsweise an die Fluidkanalstruktur (21) grenzt und eingerichtet ist, sich bei Druckbeaufschlagung durch das Fluid in der Fluidkanalstruktur (21) zu dehnen.

2. Verfahren nach Anspruch 1, **dadurch gekennzeichnet, dass** mittels der Endvorrichtung (20; 30; ...; 100) der rotationssymmetrische Hohlkörper (2) und ein weiterer rotationssymmetrischer Hohlkörper mit Zylinderform miteinander verbunden werden, wobei der rotationssymmetrische Hohlkörper (2) und der weitere rotationssymmetrische Hohlkörper unterschiedliche Durchmesser aufweisen.

3. Verfahren nach Anspruch 1 oder 2, **dadurch gekennzeichnet, dass** die elastisch nachgebende Dehnwand (33) entlang einer umlaufenden Oberfläche (31) der Endvorrichtung (20; 30; ...; 100) hergestellt wird, wobei die elastisch nachgebende Dehnwand (33) innenseitig an einen flächig ausgebildeten Kanalabschnitt (32) der Fluidkanalstruktur (21) grenzt.

4. Verfahren nach mindestens einem der vorangehenden Ansprüche, dadurch **gekenn** - **zeichnet**, dass die elastisch nachgebende Dehnwand (33) in einem Bereich einer Lagerung (72) für eine Achse (71) der Endvorrichtung (20; 30; ...; 100) ausgebildet und eingerichtet ist, die Achse in der Lagerung zu spannen und / oder die Lagerung (72) einzustellen.

5. Verfahren nach mindestens einem der vorangehenden Ansprüche, dadurch **gekenn**- **zeichnet**, dass die elastisch nachgebende Dehnwand (33) eingerichtet ist, die Endvorrichtung (20; 30; ...; 100) mittels Dehnen an dem rotationssymmetrischen Hohlkörper (2) und / oder dem weiteren rotationssymmetrischen Hohlkörper zu spannen.

6. Verfahren nach mindestens einem der vorangehenden Ansprüche, dadurch **gekenn**- **zeichnet**, dass die Fluidkanalstruktur (21) mit einem Kühlkanal (91) gebildet wird, welcher einem im Betrieb zu kühlenden Abschnitt zugeordnet ist.

7. Verfahren nach mindestens einem der vorangehenden Ansprüche, dadurch **gekenn- zeichnet**, dass die Fluidkanalstruktur (21) mit einem Schmierkanal gebildet wird, welcher mit einer Gleitlagerstelle (101) in Fluidverbindung steht.

8. Verfahren nach mindestens einem der vorangehenden Ansprüche, dadurch **gekenn**- **zeichnet**, dass die Endvorrichtung (20; 30; ...; 100) mit einer Druckerzeugungseinrichtung (36) hergestellt wird, die mit der Fluidkanalstruktur (21) verbunden und eingerichtet ist, das Fluid in der Fluidkanalstruktur (21) mit einem Druck zu beaufschlagen.

9. Verfahren nach mindestens einem der vorangehenden Ansprüche, dadurch **gekenn**- **zeichnet,** dass die Endvorrichtung (20; 30; ...; 100) mit einer Befüllvorrichtung (35) hergestellt wird, die mit der Fluidkanalstruktur (21) verbunden und eingerichtet ist, die Fluidkanalstruktur (21) mit dem Fluid zu befüllen.

10. Verfahren nach mindestens einem der vorangehenden Ansprüche, dadurch **gekenn**- **zeichnet**, dass die Endvorrichtung (20; 30; ...; 100) mit einer verschließbaren Entlüftungsvorrichtung (51) hergestellt wird, die mit der Fluidkanalstruktur (21) verbunden und eingerichtet ist, die Fluidkanalstruktur (21) zum vollständigen Befüllen mit dem Fluid zu entlüften.

11. Verfahren nach mindestens einem der vorangehenden Ansprüche, dadurch **gekenn**- **zeichnet**, dass die Endvorrichtung (20; 30; ...; 100) mittels mindestens eines additiven Fertigungsverfahrens aus der folgenden Gruppe hergestellt wird:
- extrusionsbasiertes, additives Verfahren;
- ein pulverbettbasiertes Verfahren;
- Binder Jetting oder Single Pass Jetting (SPJ);
- Auftragsverfahren;
- 3D-Druckverfahren und
- selektives Elektronenstrahlschmelzen (EBM).

12. Anordnung für einen Walzenkörper einer industriellen Walze (1), hergestellt nach einem Verfahren nach mindestens einem der vorangehenden Ansprüche, mit
- einem rotationssymmetrischen Hohlkörper (2) aus einem faserverstärkten Composite-Material und / oder einem metallischen Werkstoff, wobei der rotationssymmetrische Hohlkörper (2) eine Zylinderform aufweist; und
- einer Endvorrichtung (20; 30; ...; 100), die unter Verwendung eines additiven Fertigungsverfahrens hergestellt ist und in einem seitlichen Endbereich (3; 4) des rotationssymmetrischen Hohlkörpers (2) angeordnet und mit diesem verbunden ist,
wobei
- die Endvorrichtung (20; 30; ...; 100) beim Herstellen unter Verwendung des additiven Fertigungsverfahrens mit einer Fluidkanalstruktur (21) hergestellt ist, welche mit einem Fluid befüllbar ist; und
- die Endvorrichtung (20; 30; ...; 100) mit einer elastisch nachgebenden Dehnwand (33) hergestellt ist, die zumindest abschnittsweise an die Fluidkanalstruktur (21) grenzt und eingerichtet ist, sich bei Druckbeaufschlagung durch das Fluid in der Fluidkanalstruktur (21) zu dehnen.

13. Endvorrichtung (20; 30; ...; 100) für eine Anordnung nach Anspruch 12, hergestellt aus einem metallischen und / oder einem polymeren Werkstoff unter Verwendung eines additiven Fertigungsverfahrens,
wobei
- die Endvorrichtung (20; 30; ...; 100) beim Herstellen unter Verwendung des additiven Fertigungsverfahrens mit einer Fluidkanalstruktur (21) hergestellt ist, welche mit einem Fluid befüllbar ist; und
- die Endvorrichtung (20; 30; ...; 100) mit einer elastisch nachgebenden Dehnwand (33) hergestellt ist, die zumindest abschnittsweise an die Fluidkanalstruktur (21) grenzt und eingerichtet ist, sich bei Druckbeaufschlagung durch das Fluid in der Fluidkanalstruktur (21) zu dehnen.

14. Industrielle Walze (1) mit einer Anordnung nach Anspruch 12.

## Claims

1. A method for manufacturing an assembly for a roller body of an industrial roller (1) comprising:
- the provision of a rotationally symmetrical hollow body (2) with a cylindrical shape and is composed of a fibre-reinforced composite material and/or a metallic material;
- the manufacture of a terminal device (20; 30; ...; 100) from a metallic and/or a polymer material using an additive manufacturing method;
and
- the connection of the terminal device (20; 30; ...; 100) with the rotationally symmetrical hollow body (2), wherein it is arranged in a lateral end region (3; 4) of the rotationally symmetrical hollow body (2),
wherein
- the terminal device (20; 30; ...; 100) is manufactured, using the additive manufacturing method, with a fluid-channel structure (21) which can be filled with a fluid; and
- the terminal device (20; 30; ...; 100) is manufactured with an elastically flexible distending wall (33) which is at least partially adjacent to the fluid-channel structure (21) and is configured to distend in the fluid-channel structure (21) when pressurized by the fluid.

2. The method according to Claim 1, **characterized in that**, by means of the terminal device (20; 30; ...; 100), the rotationally symmetrical hollow body (2) and another rotationally symmetrical hollow body with a cylindrical shape are connected to each other, wherein the rotationally symmetrical hollow body (2) and the further rotationally symmetrical hollow body have different diameters.

3. The method according to Claim 1 or 2, **characterized in that** the elastically flexible distending wall (33) is manufactured along a circumferential surface (31) of the terminal device (20; 30; ...; 100), wherein the elastically flexible distending wall (33) is, on its inner side, adjacent to a flatly shaped channel section (32) of the fluid-channel structure (21).

4. The method according to at least one of the preceding claims, **characterized in that** the elastically flexible distending wall (33) in a region of a bearing (72) is designed for an axis (71) of the terminal device (20; 30; ...; 100) and is configured to tension the axis in the bearing and/or to adjust the bearing (72).

5. The method according to at least one of the preceding claims, **characterized in that** the elastically flexible distending wall (33) is configured to clamp the terminal device (20; 30; ...; 100) by distending on the rotationally symmetrical hollow body (2) and/or the further rotationally symmetrical hollow body.

6. The method according to at least one of the preceding claims, **characterized in that** the fluid-channel structure (21) is designed with a cooling channel (91) assigned to a section to be cooled during operation.

7. The method according to at least one of the preceding claims, **characterized in that** the fluid-channel structure (21) is designed with a lubrication channel which is in fluid connection with a plain bearing area (101).

8. The method according to at least one of the preceding claims, **characterized in that** the terminal device (20; 30; ...; 100) is manufactured with a pressurizing means (36) which is connected to the fluid-channel structure (21) and is configured to apply a pressure to the fluid in the fluid-channel structure (21).

9. The method according to at least one of the preceding claims, **characterized in that** the terminal device (20; 30; ...; 100) is manufactured with a filling device (35) which is connected to the fluid-channel structure (21) and is configured to fill the fluid-channel structure (21) with the fluid.

10. The method according to at least one of the preceding claims, **characterized in that** the terminal device (20; 30; ...; 100) is made with a lockable venting device (51) which is connected to the fluid-channel structure (21) and is configured to vent the fluid-channel structure (21) for complete filling with the fluid.

11. The method according to at least one of the preceding claims, **characterized in that** the terminal device (20; 30; ...; 100) is manufactured by means of at least one additive manufacturing method from the following group:
- extrusion-based, additive method;
- a powder bed-based method;
- binder jetting or single pass jetting (SPJ);
- deposition method;
- 3D printing method and
- selective electron beam melting (EBM).

12. An assembly for a roller body of an industrial roller (1) manufactured by a method according to at least one of the preceding claims, comprising
- a rotationally symmetrical hollow body (2) made of a fibre-reinforced composite material and/or a metallic material, wherein the rotationally symmetrical hollow body (2) has a cylindrical shape; and
- a terminal device (20; 30; ...; 100) which is manufactured using an additive manufacturing method and is arranged in a lateral end region (3; 4) of the rotationally symmetrical hollow body (2) and connected to it,
wherein
- the terminal device (20; 30; ...; 100) is manufactured, using the additive manufacturing method, with a fluid-channel structure (21) which can be filled with a fluid; and
- the terminal device (20; 30; ...; 100) is manufactured with an elastically flexible distending wall (33) which is at least partially adjacent to the fluid-channel structure (21) and is configured to distend in the fluid-channel structure (21) when pressurized by the fluid.

13. A terminal device (20; 30; ...; 100) for an assembly according to Claim 12, made of a metallic and/or a polymeric material using an additive manufacturing method, wherein
- the terminal device (20; 30; ...; 100) is manufactured, using the additive manufacturing method, with a fluid-channel structure (21) which can be filled with a fluid; and
- the terminal device (20; 30; ...; 100) is manufactured with an elastically flexible distending wall (33) which is at least partially adjacent to the fluid-channel structure (21) and is configured to distend in the fluid-channel structure (21) when pressurized by the fluid.

14. An industrial roller (1) comprising an assembly according to Claim 12.

## Revendications

1. Procédé, destiné à fabriquer un agencement pour un corps de rouleau d'un rouleau (1) industriel, comprenant
- la mise à disposition d'un corps creux (2) symétrique en rotation qui présente une forme cylindrique et qui est constitué d'un matériau composite renforcé par fibres et / ou d'une matière métallique ;
- la fabrication d'un dispositif final (20 ; 30 ; ... ; 100) en une matière métallique et / ou en une matière polymère, en ayant recours à un procédé de fabrication additif ; et
- l'assemblage du dispositif final (20 ; 30 ; ... ; 100) avec le corps creux (2) symétrique en rotation, celui-ci étant placé à cet effet dans une zone d'extrémité (3 ; 4) latérale du corps creux (2) symétrique en rotation,
- lors de la fabrication en ayant recours au procédé de fabrication additif, le dispositif final (20 ; 30 ; ... ; 100) étant fabriqué avec une structure (21) de canal à fluide, laquelle est susceptible d'être remplie avec un fluide ; et
- le dispositif final (20 ; 30 ; ... ; 100) étant fabriqué avec une paroi de dilatation (33) élastiquement déformable, qui est adjacente au moins par endroits à la structure (21) de canal à fluide et qui est configurée pour se dilater sous l'effet du fluide dans la structure (21) de canal à fluide, lorsqu'elle est soumise à une pression.

2. Procédé selon la revendication 1, **caractérisé en ce qu'**au moyen du dispositif final (20 ; 30 ; ... ; 100), l'on assemble l'un avec l'autre le corps creux (2) symétrique en rotation et un corps creux symétrique en rotation supplémentaire, de forme cylindrique, le corps creux (2) symétrique en rotation et le corps creux symétrique en rotation supplémentaire présentant différents diamètres.

3. Procédé selon la revendication 1 ou 2, **caractérisé en ce que** l'on fabrique la paroi de dilatation (33) élastiquement déformable le long d'une surface (31) périphérique du dispositif final (20 ; 30 ; ... ; 100), la paroi de dilatation (33) élastiquement déformable étant adjacente par sa face intérieure à un tronçon de canal (32) de la structure (21) de canal à fluide.

4. Procédé selon au moins l'une quelconque des revendications précédentes, **caractérisé en ce que** la paroi de dilatation (33) élastiquement déformable est conçue dans une zone d'un logement (72) pour un axe (71) du dispositif final (20 ; 30 ; ... ; 100) et configuré pour serrer l'axe dans le logement et / ou pour régler le logement (72).

5. Procédé selon au moins l'une quelconque des revendications précédentes, **caractérisé en ce que** la paroi de dilatation (33) élastiquement déformable est configurée pour serrer le dispositif final (20 ; 30 ; ... ; 100) par dilatation sur le corps creux (2) symétrique en rotation et / ou sur le corps creux symétrique en rotation supplémentaire.

6. Procédé selon au moins l'une quelconque des revendications précédentes, **caractérisé en ce que** l'on créé la structure (21) de canal à fluide avec un canal de refroidissement (91), lequel est associé à un tronçon qui doit être refroidi en cours de fonctionnement.

7. Procédé selon au moins l'une quelconque des revendications précédentes, **caractérisé en ce que** l'on créé la structure (21) de canal à fluide avec un canal de lubrification, lequel se trouve en liaison fluidique avec un emplacement (101) de palier lisse.

8. Procédé selon au moins l'une quelconque des revendications précédentes, **caractérisé en ce que** l'on fabrique le dispositif final (20 ; 30 ; ... ; 100) avec un système (36) générateur de pression, qui est assemblé avec la structure (21) de canal à fluide et configuré pour soumettre à une pression la structure (21) de canal à fluide.

9. Procédé selon au moins l'une quelconque des revendications précédentes, **caractérisé en ce que** l'on fabrique le dispositif final (20 ; 30 ; ... ; 100) avec un dispositif de remplissage (35), qui est assemblé avec la structure (21) de canal à fluide et configuré pour remplir la structure (21) de canal à fluide avec le fluide.

10. Procédé selon au moins l'une quelconque des revendications précédentes, **caractérisé en ce que** l'on fabrique le dispositif final (20 ; 30 ; ... ; 100) avec un dispositif de purge (51) fermable, qui est assemblé avec la structure (21) de canal à fluide et configuré pour purger la structure (21) de canal à fluide pour son remplissage complet avec du fluide.

11. Procédé selon au moins l'une quelconque des revendications précédentes, **caractérisé en ce que** l'on fabrique le dispositif final (20 ; 30 ; ... ; 100) au moyen d'au moins un procédé de fabrication additif du groupe suivant :
- procédé additif à base d'extrusion ;
- un procédé à base de lit de poudre ;
- projection de liant ou Single Pass Jetting (SPJ) ;
- procédé d'application ;
- procédé d'impression en 3 D et
- fusion sélective par faisceau d'électrons (EBM).

12. Agencement pour un corps de rouleau d'un rouleau (1) industriel, fabriqué d'après un procédé selon au moins l'une quelconque des revendications précédentes, comprenant
- un corps creux (2) symétrique en rotation qui présente une forme cylindrique et qui est constitué d'un matériau composite renforcé par fibres et / ou d'une matière métallique ; et
- un dispositif final (20 ; 30 ; ... ; 100), qui est fabriqué en ayant recours à un procédé de fabrication additif et qui est placé dans une zone d'extrémité (3 ; 4) latérale du corps creux (2) symétrique en rotation et qui est assemblé avec celui-ci
- lors de la fabrication en ayant recours au procédé de fabrication additif, le dispositif final (20 ; 30 ; ... ; 100) étant fabriqué avec une structure (21) de canal à fluide, laquelle est susceptible d'être remplie avec un fluide ; et
- le dispositif final (20 ; 30 ; ... ; 100) étant fabriqué avec une paroi de dilatation (33) élastiquement déformable, qui est adjacente au moins par endroits à la structure (21) de canal à fluide et qui est configurée pour se dilater sous l'effet du fluide dans la structure (21) de canal à fluide, lorsqu'elle est soumise à une pression.

13. Dispositif final (20 ; 30 ; ... ; 100) pour un agencement selon la revendication 12, fabriqué en une matière métallique et / ou en une matière polymère en ayant recours à un procédé de fabrication additif,
- lors de la fabrication en ayant recours au procédé de fabrication additif, le dispositif final (20 ; 30 ; ... ; 100) étant fabriqué avec une structure (21) de canal à fluide, laquelle est susceptible d'être remplie avec un fluide ; et
- le dispositif final (20 ; 30 ; ... ; 100) étant fabriqué avec une paroi de dilatation (33) élastiquement déformable, qui est adjacente au moins par endroits à la structure (21) de canal à fluide et qui est configurée pour se dilater sous l'effet du fluide dans la structure (21) de canal à fluide, lorsqu'elle est soumise à une pression.

14. Rouleau industriel (1), équipé d'un agencement selon la revendication 12.
